# EUROPEAN PATENT APPLICATION

(11) **EP 2 354 867 A2**
(43) Date of publication of application: **10.08.2011**
(21) Application number: 10188809.7
(22) Date of filing: 26.10.2010
(51) Int. Cl.: G05B 19/042

(54) **USB HVAC service verification**

(30) Priority: 27.01.2010 US 694407
(71) Applicant: Lennox Industries Inc., Richardson, TX 75080 (US)
(72) Inventor: Bennett, Alan E., Denton, TX 76210 (US); Gilkison, Robert W., Lewisville, TX 75056 (US); Hess, Mark D., Plano, TX 75025 (US); Mauk, Richard A., Lewisville, TX 75056 (US); Thomas, John G., McKinney, TX 75070 (US)
(74) Representative: Williams, David John

(57) **Abstract**

An HVAC system includes an enclosure for containing components of the HVAC system. Associated with the enclosure is an HVAC system control unit including a microcontroller for controlling an operation of the HVAC system. The HVAC system control unit further includes a memory associated with the microcontroller and configured to store data associated with operation of the HVAC system. The microcontroller is configurable to directly transfer the data between the memory and a portable flash memory device. The HVAC system control unit further includes a portable flash memory device interface for coupling the portable flash memory device directly thereto.

## Description

### CROSS-REFERENCE TO RELATED APPLICATION

This application claims the benefit of U.S. Application Serial No. 12/694,407, filed by Mark Beste, et al., on January 27, 2010, entitled "USB HVAC SERVICE VERIFICATION," commonly assigned with this application and incorporated herein by reference.

### TECHNICAL FIELD

This application is directed, in general, to a heating, ventilation and air conditioning (HVAC) and, more specifically, to control and configuration of HVAC systems.

### BACKGROUND

HVAC systems are typically serviced on a regular or intermittent basis for installation, repair and maintenance. An owner of an HVAC system being serviced typically contracts with a local HVAC service provider to perform such service. The service provider or an agent thereof performs the contracted service by visiting the site of the HVAC system. The system may be located in a location that is difficult to reach, such as a building rooftop. Such locations are not easily amenable to transporting equipment to the HVAC system site, especially heavy and/or bulky equipment. Exposure to the elements discourages use of some equipment, such as computers that have not been hardened to operate in adverse environmental conditions. Furthermore, in many cases a service technician may not be trusted with possession of valuable electronic devices such as a portable computer.

### SUMMARY

One aspect provides an HVAC system including an enclosure for containing components of the HVAC system. Associated with the enclosure is an HVAC system control unit including a microcontroller for controlling an operation of the HVAC system. The HVAC system control unit further includes a memory associated with the microcontroller and configured to store data associated with operation of the HVAC system. The microcontroller is configurable to directly transfer the data between the memory and a portable flash memory device. The HVAC system control unit further includes a portable flash memory device interface for coupling the portable flash memory device directly thereto.

Another aspect provides a method of manufacturing an HVAC system. The method includes configuring an enclosure to contain components of an HVAC system. An HVAC system control unit is located within the enclosure and includes a microcontroller for controlling an operation of the HVAC system. A parameter memory associated with the microcontroller is included within the HVAC system control unit. The method further includes configuring the parameter memory to store data associated with operation of the HVAC system. The microcontroller is configurable to directly transfer the data between the memory and a portable flash memory device. The HVAC system control unit is provided with a portable flash memory device interface for coupling the portable flash memory device directly to the microcontroller.

Yet another aspect provides an HVAC system control unit, including a microcontroller. The microcontroller is configured to controlling an operation of an HVAC system. A memory associated with the microcontroller is configured to store data associated with operation of the HVAC system, and further configurable to directly transfer the data between the memory and a portable flash memory device. The HVAC system control unit includes a portable flash memory device interface for coupling the portable flash memory device directly to the microcontroller.

### BRIEF DESCRIPTION

Reference is now made to the following descriptions taken in conjunction with the accompanying drawings, in which:
FIG. 1 illustrates a cluster of HVAC systems on a rooftop;
FIG. 2 illustrates an HVAC system of the disclosure including an HVAC system control unit;
FIG. 3 illustrates an HVAC system control unit including a portable flash memory device port;
FIG. 4 illustrates a schematic of an embodiment of the HVAC system control unit;
FIG. 5 presents a method of servicing an HVAC system;
FIG. 6 illustrates an HVAC system profile;
FIG. 7 presents a method of verifying service to an HVAC system; and
FIGs. 8A and 8B present a method manufacturing an HVAC system.

### DETAILED DESCRIPTION

Commercial HVAC system operators, such as a corporation, partnership, an individual, or any other entity that contracts with a HVAC service provider for maintenance of an HVAC system, are increasingly concerned about the quality of service performed on HVAC systems by HVAC service providers (corporate or individual service technicians), *e.g*., the impact on energy efficiency, and the desire to control service expenses. Completeness of service, future service needs, and anticipated capital improvements are determined from data collected from currently operated HVAC systems. Moreover, operators seek to ensure that services performed are handled efficiently, quickly, and cost-effectively. However, the data available to the operators is incomplete.

Some information regarding a HVAC unit is provided by a service technician who visits the unit to perform installation, repairs or maintenance. However, such information is typically limited in scope, and the operator has no way to verify if the reported data are correct. In some cases, an HVAC system is networked, with some data related to the operation of the HVAC system being available to the operator. However, in conventional HVAC operation such data do not guarantee that the service technician has physically visited the HVAC unit. Thus, the operator has no way to verify that repairs that do not modify data obtained via the network have been performed as contracted.

In a related aspect of HVAC maintenance, call-in service centers may provide assistance to a service technician or HVAC system operator. A remote service provider located at the call-in center is often placed in the position of attempting to solve complex issues without detailed data regarding the subject HVAC system. There thus exists a need to provide the remote service provider with precise and timely data from the HVAC unit to improve efficiency and effectiveness of call-in center support.

Some HVAC systems are configured to accept a connection from a portable computer, *e.g*. a laptop computer. Such a connection may be used, *e.g*., during the manufacturing process to configure the HVAC system. However, the utility of such a connection after the HVAC system is installed is extremely limited, as service technicians frequently do not have a portable computer, and the site of installation, *e.g*., outdoors, often on a building roof, is generally poorly suited for portable computers. In addition, the weight of the portable computer may create difficulty or hazard to the service technician when accessing a rooftop HVAC system, *e.g*., climbing a ladder.

None of Trane, Carrier, York, Aaon or other residential or commercial HVAC manufacturers are known to have recognized the benefits provided by the various embodiments provided herein. Thus, the need exists to verify service, document changes, and provide a lightweight method to transfer information.

The present disclosure benefits from the unique recognition that portable and inexpensive flash memory may be advantageously used in an HVAC service setting for various purposes to speed service, reduce the cost of service, and ensure service is performed. Portable flash memory devices (PFMDs) have become ubiquitous in consumer electronics. Readily available and relatively insensitive to water and dirt, these devices provide a convenient medium for data transfer by an HVAC service technician in various embodiments described herein. The following description is provided in the context of rooftop commercial HVAC units, but the disclosure is not limited thereto. For example, an HVAC system 120 may be commercial or residential, located on a rooftop or at ground level.

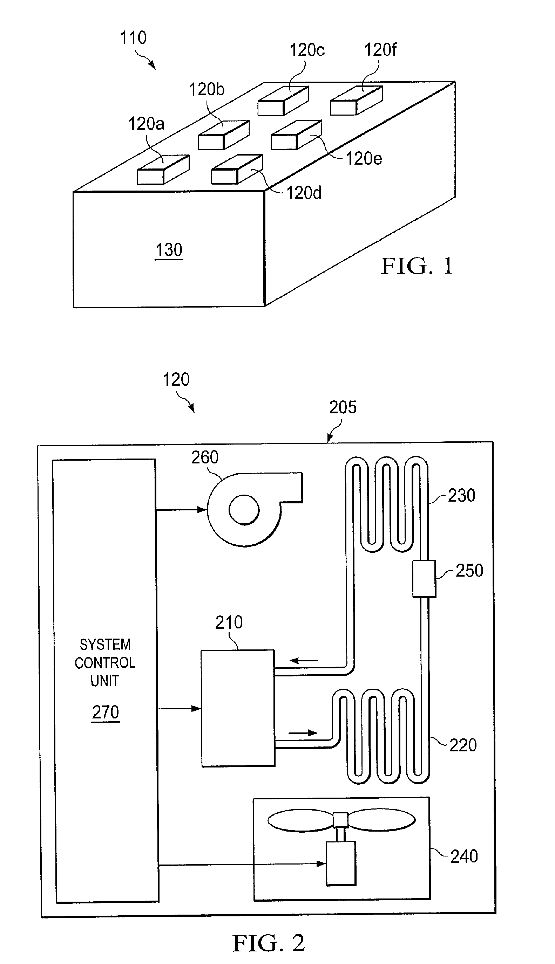

Turning initially to FIG. 1, a cluster 110 of HVAC systems 120a-120f is located on a rooftop of a building 130. The HVAC systems 120 may be configured to cool the interior space of the building 130. The cluster 110 may be managed via a centralized management system operated by an owner or lessee of the building 130. For example, the building 130 may be one of many retail stores operated by a national chain. The store owner may manage the cluster 110 from a central location to monitor energy consumption and provide general maintenance.

FIG. 2 illustrates internal aspects of the HVAC system 120, sometimes referred herein to simply as the system 120. The system 120 includes an enclosure 205 for containing various components of the system 120. The system 120 includes a compressor 210, a condenser coil 220 and an evaporator coil 230. The operation of the system 120 is described without limitation in the context of cooling air in an interior space of the building 130. The compressor 210 compresses a refrigerant that flows to the condenser coil 220 over which a fan 240 moves air to transfer heat to the ambient environment. The refrigerant flows through an expansion valve 250, cools and flows through the evaporator coil 230. Air from an interior space being conditioned by the system 120 is cooled as it is moved past the evaporator coil 230 by a blower 260. The operation of the various components of the system 120 is controlled at least in part by an HVAC system control unit 270, or simply control unit 270. The system 120 is an integrated HVAC system, including both the condenser coil 220 and the evaporator coil 230 within the enclosure 205. Other HVAC systems are also within the scope of the disclosure, including indoor units, outdoor units, attic units, and heat pumps.

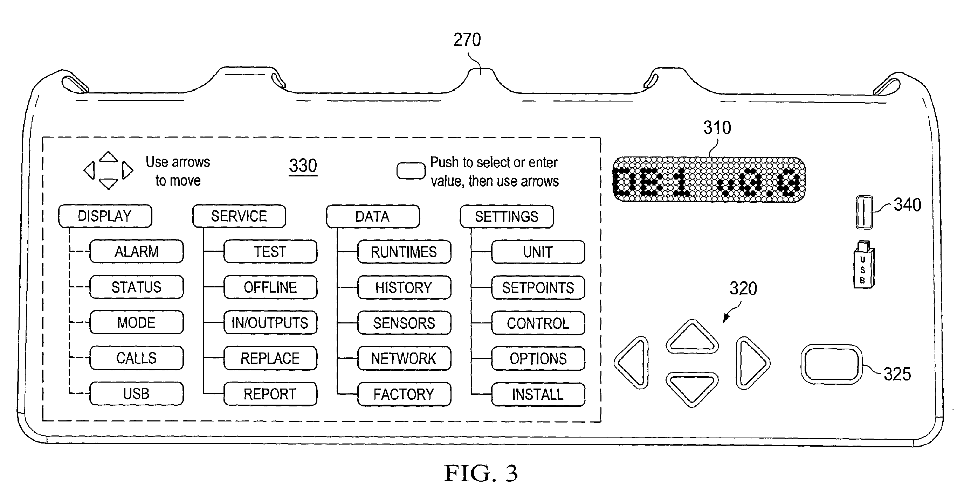

FIG. 3 illustrates an embodiment of the control unit 270, presented without limitation. The control unit 270 may include a display 310 and an input keypad 320. The display 310 may present various menus, parameters, and other configuration information to a user. The keypad 320 may accept user input to make selections presented to the user by the display 310, navigate among menus, and input configuration parameters. Selections may be finalized by an enter button 325. The control unit 270 may advantageously include a menu map 330 for reference by the user when interacting with the control unit 270.

The control unit 270 also includes a portable flash memory device (PFMD) port 340. The port 340 may be a hard-wire port or may include a wireless port that can communicate wirelessly with a PFMD device. In one embodiment, the PFMD port 340 is configured to couple a PFMD to the control unit 270. The PFMD port 340 is illustrated without limitation as a universal serial bus (USB) port. However, embodiments contemplated by the disclosure more generally include any conventional or future-developed portable device including flash memory (FM) or equivalent. Herein and in the claims, FM includes without limitation, *e.g*., USB flash memory, also known as thumb drives, jump drives, pen drives, and other colloquial terms; Memory Stick™; SmartMedia™, Compact Flash™ (CF) in its various revisions and form factors; Secure Digital™ (SD); and any other functional equivalent of the aforementioned flash memory types, including future-developed portable rewritable solid state memory technology. Hereinafter the disclosure may present various embodiments with reference to the USB FM. Such embodiments are presented without limitation to the type of FM employed.

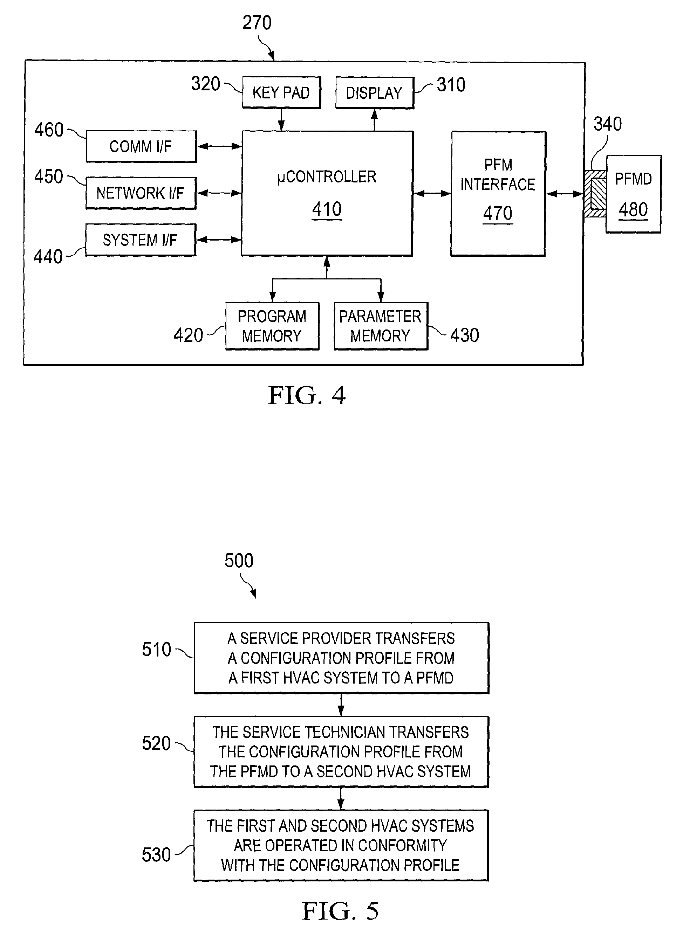

Turning to FIG. 4, an example embodiment of the system control unit 270 is illustrated without limitation. The control unit 270 includes, as previously described, the keypad 320, the display 310 and the PFMD port 340. A microcontroller 410 accepts inputs from the keypad 320 and provides output data to the display 310. The microcontroller 410 may be any conventional or future developed microcontroller, microprocessor or state machine, *e.g*. The microcontroller 410 operates in response to program instructions read from a conventional program memory 420 to control aspects of the operation of the HVAC system 120. The program instructions are sometimes referred to as "firmware." The program memory 420 may include both nonvolatile memory for persistent storage of program instructions and volatile memory for temporary storage of data. The memory may also include rewritable memory, *e.g*., flash memory, to allow for updating of the program instructions.

Among the functions of the microcontroller 410 is storage in a conventional parameter memory 430 of parameters associated with operation of the system 120. Parameters may include, *e.g*., hardware configuration settings, component serial numbers, installed options, hardware revisions, control algorithm coefficients, operational data, diagnostics, service history, temperature set points and setback times. The parameter memory 430 may be volatile or nonvolatile, though in various embodiments nonvolatile memory, *e.g*. flash memory, may be preferred to retain stored parameters if power to the system 120 is interrupted.

The microcontroller 410 interacts with other components of the system 120 via a system interface 440. The system interface 440 may include necessary electronic components to address various components of the system 120, and to provide control signals at appropriate voltage levels. A network interface 450 may provide an interface to a network, *e.g*., a local area network (LAN) or the internet. The network interface 450 may allow monitoring of various operational aspects of the system 120, such as operational status, and power consumption. A computer interface 460 provides a means to couple a computer to the control unit 270. The computer interface 460 is conventionally used to configure the system 120 during the manufacturing process, *e.g*.

A PFM interface 470 couples the microcontroller 410 to a PFMD 480. The PFM interface 470 provides any necessary signal buffering and/or address encoding/decoding and/or control signals necessary to read from or write to memory locations within the PFMD 480. In some embodiments the PFM interface 470 is wholly contained within the functionality of the microcontroller 410. In other embodiments the PFM interface 470 is implemented by one or more components separate and distinct from the microcontroller 410.

The program memory 420 includes instructions that configure the microcontroller 410 to transfer data between the PFMD 480 and the parameter memory 430. In various embodiments such transfer is in response to commands entered by a user via the keypad 320. In some embodiments, the microcontroller 410 is configurable to recognize the presence of the PFMD 480 when the PFMD 480 is inserted into the PFMD port 340, and to automatically transfer data between the parameter memory 430 and the PFMD 480 without the need for a user command.

The PFMD port 340 provides a means for the service technician to directly transfer data between the PFMD 480 and the parameter memory 430. Herein and in the claims, the phrase "directly transfer" and variations thereof mean that data are transferred between the PFMD 480 and the parameter memory 430 without the involvement of an intervening computer, such as a portable computer or network server. The microcontroller 410 is not an intervening computing device in this context.

In various embodiments, the microcontroller 410 stores system configuration data in the parameter memory 430 in a system profile, *e.g*., a binary or ASCII file. The system profile may include various parameters associated with operation of the system 120. In some embodiments the system profile includes several hundred individual settings. In particular, the parameters may define an operational configuration of the system 120 that defines the behavior of the system 120. By this it is meant two systems 120 that are similarly configured with respect to HVAC components (compressor, fans, blowers, etc.) will behave essentially in the same manner in all operationally significant aspects when a particular system profile is installed on both systems. Thus, *e.g*., systems 120 in the cluster 110 may be configured to operate in a same manner by installation of a common configuration file on each system 120 in the cluster 110.

FIG. 5 illustrates a method generally designated 500 of servicing an HVAC system that advantageously benefits from the transferability of the configuration file via the PFMD 480. In a step 510, a service provider, *e.g*., HVAC technician, transfers a configuration profile from a first HVAC system 120 to the PFMD 480. The HVAC technician may be servicing one HVAC system 120 in the cluster 110, *e.g*. As part of the servicing, the technician may change one or more parameters that in turn changes an aspect of the performance of the system 120 being serviced. It may be desired to similarly modify all the systems 120 in the cluster 110 so all the systems 120 operate with essentially the same characteristics.

As mentioned previously, the technician is very unlikely to have a portable computer available to assist configuring the other systems 120 in the cluster. Thus, in conventional practice the technician typically repeats the configuration process for each other system 120 in the cluster. In cases in which an HVAC system includes an interface similar to the control unit 270, but lacks the PFMD port 340, the technician may need to enter multiple parameter changes via a keypad, involving hundreds of key presses. When an HVAC cluster includes more than a small number of HVAC systems, the time required to enter changes to all the systems is time consuming and may result in considerable expense.

In contrast to conventional practice, in a step 520 the technician transfers the configuration file from the PFMD 480, previously obtained from the first system 120, to a second HVAC system 120. The microcontroller 410 is configured to transfer the configuration file directly, *e.g*., without the assistance of another computer system, from the PFMD 480 to the parameter memory 430 of the second HVAC system 120. If the configuration file is encrypted, as discussed below, the microcontroller 410 may also decrypt the contents thereof before storing the parameters in the parameter memory 430. The control unit 270 may be configured to effect the transfer with a small number of key strokes, resulting in rapid reconfiguration of the second system 120. Of course, the second system 120 need not be in close proximity to the first system 120. The technician may store the PFMD 480 in his or her pocket and reconfigure any number of other systems 120 over any time period at any location. The technician may even have several PFMDs 480, one each for different models or configurations of the HVAC system 120. In some embodiments the microcontroller 410 stores the configuration file with a time stamp or other identifying string that allows the technician to retrieve one of two or more configuration files from the PFMD 480 that corresponds to a desired configuration of the system 120. Thus multiple system configurations may be stored on and retrieved from a single PFMD 480.

Finally, in a step 530 the first and the second HVAC systems 120 are operated in conformity with the configuration file stored in the parameter memory 430.

In various embodiments the control unit 270 is configured to generate a service verification report. The service verification report is a data structure that may be written to the PFMD 480. In various embodiments the data structure includes various data relevant to determining that the service technician performed services to the system 120. Examples of such data include, without limitation, a date, a time, a serial number of an HVAC unit, a technician ID, configuration parameters as configured prior to the service, and configuration parameters as configured after the service. The system control unit 270 is configured in various embodiments to copy the service verification report from a memory, *e.g*., the parameter memory 430, to the PFMD 480. The transfer may be initiated by key strokes by the technician via the keypad 320, *e.g*. In some embodiments the service verification report is generated "on the fly" when a request to transfer the report to the PFMD 480 is made. In such cases, the microcontroller may draw from data available in other locations or contexts in the system 120, *e.g*., the configuration file, time and data from a system clock, etc., while generating the service report. The service verification report may be provided to the HVAC operator to verify the presence of the technician at the system 120 being serviced, as described further below.

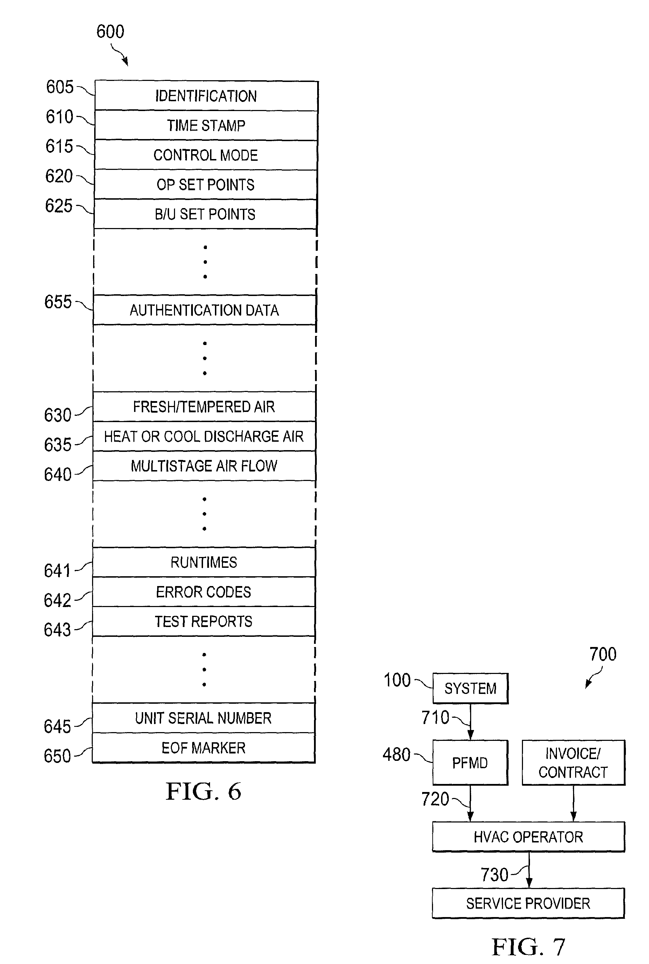

Turning to FIG. 6, illustrated is an embodiment of a portion of a service verification report 600. The report 600 may have as many data fields as are desired. The report 600 includes a number of fields for illustration. A field 605 may include an identifying string, such as a file name. A field 610 may include a time stamp, date stamp or similar manner of indicating a time the report 600 is generated. A field 615 may indicate a control mode in which the system 120 is configured to operate, such as, *e.g*., heating or cooling. A field 620 may include operating set points, such as a target cooling temperature or a target heating temperature. A field 625 may include backup set points, *e.g*., set points that are used if a primary control fails. A field 630 may include a parameter indicating whether the system is configured to use fresh or tempered air. A field 635 may include a parameter indicating whether discharge air is heated or cooled. A field 640 may include a parameter indicating whether the system 120 is configured for multistage air flow. A field 645 may include a unit serial number. Fields 641, 642 and 643 may respectively include equipment operational information such as runtime hours for major parts, error codes for equipment failures, and reports from self or installation tests. And a field 650 may include an end-of-file marker.

A feature of various embodiments presented herein is the ability to ensure integrity of data on the PFMD 480. A service provider might be tempted to tamper with data on the PFMD 480, such as a configuration file or a service verification report, to create the false appearance that service was performed. It is an objective of various embodiments herein to provide a high confidence level on the part of an HVAC operator that data provided via the PFMD 480 to support a service claim is authentic.

Thus, in some embodiments the report 600 includes authentication data 655. The authentication data 655 may be used to verify the integrity of the report 600 when the HVAC operator determines if a service claim properly reflects services rendered. The authentication data 655 may include, *e.g*., values derived from other data fields in the report 600. For example, the authentication data 655 may include a CRC computed for a proper subset of the data fields. The authentication data 655 may be placed in multiple locations in the report 600, and may be encrypted. In some cases, multiple inclusions of identical information may be placed in multiple locations in the report 600, with different encryption schemes used for duplicate inclusions. In some cases, the entire service verification report is encrypted by the microcontroller 410 when written to the PFMD 480.

More generally, a service verification report, such as the report 600, is but one type of electronic verification file that may be used to verify the presence of the service provider at the system 120. The system profile may also be used in this manner, as well as any electronic verification file that includes data that may obtained easily by the operator only by being present at the system 120.

After the electronic verification file is transferred to the PFMD 480, the service provider may transport the PFMD 380 to a location from which he or she may provide the electronic verification file to the HVAC operator in a form the HVAC operator may use to verify the presence of the service provider at the system 120. For example, the service provider may provide the PFMD 380 to the HVAC operator, may upload the electronic verification file to a database or server accessible to the HVAC operator, or may attach the electronic verification file to an electronic message (*e.g*., email). An electronic message may, for example, include a service invoice and the service verification file. The HVAC operator may then authenticate the service verification file, verify requested services were actually performed, and remit payment to the service provider.

A method generally designated 700 of verifying the performance of service using an electronic verification file is presented in FIG. 7. The method is described without limitation with reference to the service verification report 600, and the system 120 and components thereof. In a step 710, a service provider causes the system 120 to transfer the electronic verification file to the PFMD 480. As described earlier, the service provider may cause the transfer by selecting appropriate commands on the system control unit 270. In a step 720, the service provider, or an agent thereof, provides the electronic verification file to the HVAC operator. The HVAC operator may process the electronic verification file by, *e.g*., decrypting the file, computing and verifying a CRC value, comparing serial numbers or model numbers with an equipment database, comparing a service provider serial number with a service provider database, etc. The HVAC operator may also receive an invoice associated with the services rendered by the service provider, either with the electronic verification file or by a separate route. In a step 730 the HVAC operator remits payment or credits an account of the service provider in response to verifying the authenticity of the received electronic verification file, and in some cases verifying that parameters contained by the system verification file indicate services were actually performed.

The control unit 270 is also configured in various embodiments to provide additional useful functionality via the PFMD port 340. In one embodiment, the control unit 270 is configured to update the program instructions located on the program memory 420 with updated program instructions located on the PFMD 480. The update may be in response to commands entered via the keypad 320, or automatically when the microcontroller 410 recognizes updated firmware on the PFMD 480.

In an embodiment the control unit 270 is configured to store controller status logs and error logs on the PFMD 480. These data may be used, *e.g*., for later analysis by the HVAC operator, manufacturer or dealer. Such data may be uploaded to a service database, or otherwise transmitted to an interested party. In some cases system 120 operational data are transferred to the PFMD 480 and transferred to a remote service provider, such as a central manufacturer service center, or "help desk." A remote agent, either human or machine, may use the operational data to diagnose system errors, malfunctions, etc. Possession of these data by the remote agent is expected to simplify diagnosis by the remote agent and reduce the time and expense needed to obtain advice, a diagnosis of an error, or other information from the remote agent. In some cases, the data are transferred to an analyst to determine operational trends of the system 120. For example, operational parameters may reveal trends relevant to preventative maintenance or reduction of energy consumption.

The control unit 270 may also be configured to support various utility functions via the PFMD port 340. For example, when configured as a USB port, the PFMD port may provide power to a light or a fan, or may charge a portable electronic device such as a cell phone.

The control unit 270 may also be configured to provide some diagnostic capability via the PFMD port 340. For example, the control unit 270 may provide system data such as serial numbers, configuration data, firmware revisions, coolant pressure and error codes to a computer coupled to the PFMD port 380. In some embodiments, the control unit 270 is configured to distribute power to it through the PFMD port 340 to energize sensors or other electronics necessary to effect the transfer of the aforementioned data. Such embodiments may have particular utility in a manufacturing or shipping context, to provide a means to determine the identity or basic health of the system 120 without the need to remove packing materials, open panels, etc.

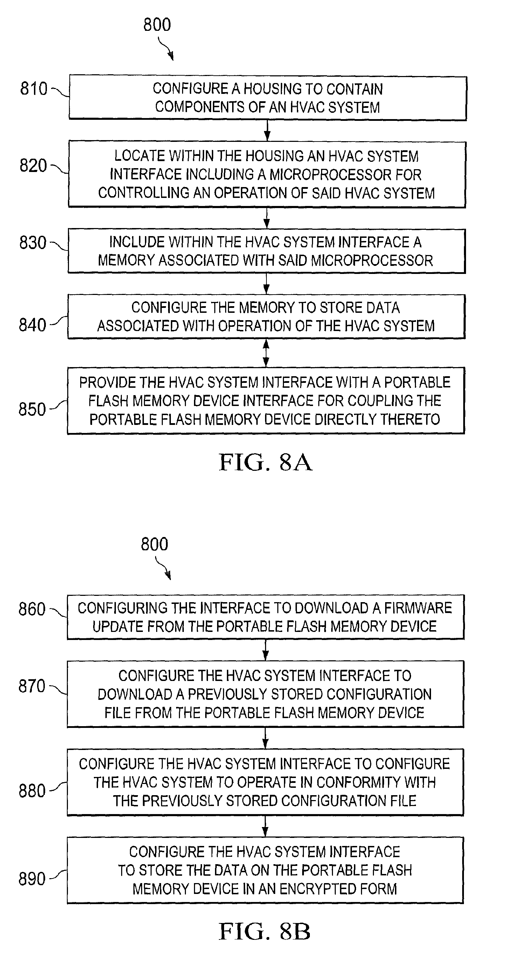

Turning now to FIG. 8A, a method generally designated 800 of manufacturing an HVAC system is presented. The method is described without limitation with reference to the system 120 and components thereof. In a step 810, a housing such as the enclosure 205 is configured to contain components of the HVAC system 120. In a step 820, an HVAC system control unit such as the control unit 270, is located within the housing. The interface includes a microcontroller for controlling an operation of the HVAC system. In a step 830 a memory is included within the HVAC system control unit and associated with the microcontroller. In a step 840 the memory is configured to store data associated with operation of the HVAC system. In a step 850, the HVAC system control unit is provided with a portable flash memory device interface for coupling the PFMD directly to the microcontroller.

FIG. 8B presents additional optional steps in the method 800. In a step 860, the HVAC system control unit is configured to download a firmware update from the portable memory device. The firmware update may be installed by the microcontroller 410 in the program memory 420, *e.g*. In a step 870 the HVAC system control unit is configured to download a previously stored configuration file from the portable flash memory device. In a step 880, the HVAC system control unit is configured to adapt the HVAC system to operate in conformity with the previously stored configuration file. In a step 890, the HVAC system control unit is configured to store the data on the PFMD in an encrypted form.

Those skilled in the art to which this application relates will appreciate that other and further additions, deletions, substitutions and modifications may be made to the described embodiments.

## Claims

1. An HVAC system, comprising:
an enclosure for containing components of said HVAC system;
an HVAC system control unit including a microcontroller located within said enclosure for controlling an operation of said HVAC system;
said HVAC system control unit further including a memory associated with said microcontroller and configured to store data associated with operation of said HVAC system, said microcontroller configurable to directly transfer said data between said memory and a portable flash memory device; and
said HVAC system control unit further including a portable flash memory device interface for coupling said portable flash memory device directly thereto.

2. The HVAC system as recited in Claim 1, wherein said interface is further configured to download a firmware update from said portable memory device.

3. The HVAC system as recited in Claim 1, wherein said interface is further configured to download from said portable flash memory device a previously stored configuration file, and to configure said HVAC system to conform to said previously stored configuration file.

4. A method of manufacturing an HVAC system, comprising:
configuring an enclosure to contain components of an HVAC system;
locating within said enclosure an HVAC system control unit including a microcontroller for controlling an operation of said HVAC system;
including within said HVAC system control unit a parameter memory associated with said microcontroller and configuring said parameter memory to store data associated with operation of said HVAC system, said microcontroller configurable to directly transfer said data between said memory and a portable flash memory device; and
providing said HVAC system control unit with a portable flash memory device interface for coupling said portable flash memory device directly to the microcontroller.

5. The method as recited in Claim 4, wherein said data comprises a system profile or a service verification report.

6. The method as recited in Claim 4, further comprising configuring said HVAC system control unit to:
download from said portable flash memory device a previously stored configuration file; and
adapt said HVAC system to operate in conformity with said previously stored configuration file.

7. An HVAC system control unit, comprising:
a microcontroller for controlling an operation of an HVAC system;
a memory associated with said microcontroller and configured to store data associated with operation of said HVAC system, said microcontroller configurable to directly transfer said data between said memory and a portable flash memory device; and
a portable flash memory device interface for coupling said portable flash memory device directly to said microcontroller.

8. The HVAC system control unit as recited in Claim 7, wherein said data comprises a system profile or a service verification report.

9. The HVAC system control unit as recited in Claim 7, wherein said interface is further configured to download a firmware update from said portable memory device.

10. The HVAC system control unit as recited in Claim 7, wherein said interface is further configured to download from said portable flash memory device a previously stored configuration file, and to configure said HVAC system to conform to said previously stored configuration file.
